# EUROPEAN PATENT APPLICATION

(11) **EP 4 831 255 A1**
(43) Date of publication of application: **28.10.2026**
(21) Application number: 24906926.1
(22) Date of filing: 28.10.2024
(51) Int. Cl.: C09D 201/00, C09D 7/61

(54) **METHOD FOR PRODUCING COATING AGENT AND METHOD FOR PRODUCING COATING FILM**

(30) Priority: 21.12.2023 JP 2023215623
(71) Applicant: Panasonic Intellectual Property Management Co., Ltd., Kadoma-shi, Osaka 571-0057 (JP)
(72) Inventor: KAJIYAMA, Kenichi, Osaka 571-0057 (JP); OGURA, Motonari, Osaka 571-0057 (JP); KAWAI, Yoshihiro, Mie 518-0751 (JP)
(74) Representative: Eisenführ Speiser
(86) International application number: PCT/JP2024/038291
(87) International publication number: WO 2025/134538

(57) **Abstract**

A method for manufacturing a coating agent includes: performing heat treatment on a silver-based glass antibacterial agent; and mixing a curable resin component, a solvent, and the silver-based glass antibacterial agent on which the heat treatment has been performed. A × B is 8400 or more, where a heating temperature of the heat treatment is denoted by A[°C] and a heating time is denoted by B [minutes].

## Description

### [Technical Field]

The present disclosure relates to a method for manufacturing a coating agent and a method for manufacturing a coating film.

### [Background Art]

In recent years, there is an increasing demand for antibacterial and antiviral materials. One method for contributing to antibacterial and antiviral properties of a material is a method in which a coating agent having antibacterial and antiviral properties is applied. For example, Patent Literature (PTL) 1 discloses an antibacterial and antiviral coating agent that includes silver-based inorganic particles.

### [Citation List]

### [Patent Literature]

[PTL 1] Japanese Unexamined Patent Application Publication No. 2023-4856

### [Summary of Invention]

### [Technical Problem]

For coating agents having antibacterial and antiviral properties, the improvement of antibacterial and antiviral performance is a vital issue. Furthermore, for example, by improving antibacterial and antiviral performance of an antibacterial agent used in a coating agent, it is possible to maintain antibacterial and antiviral performance of a coating film that is formed by the coating agent even when the amount of the antibacterial agent added is reduced. Accordingly, such an improvement in the antibacterial and antiviral performance of the antibacterial agent itself is considered to be useful from the standpoint of maintaining optical characteristics in a case in which the coating agent is to be used for an optical application.

In view of this, the present disclosure provides a method for manufacturing a coating agent and the like for which antibacterial and antiviral performance can be improved.

### [Solution to Problem]

A method for manufacturing a coating agent according to one aspect of the present disclosure includes: performing heat treatment on a silver-based glass antibacterial agent; and mixing a curable resin component, a solvent, and the silver-based glass antibacterial agent on which the heat treatment has been performed, wherein A × B is 8400 or more, where a heating temperature of the heat treatment is denoted by A[°C] and a heating time is denoted by B [minutes].

Furthermore, a method for manufacturing a coating film according to one aspect of the present disclosure includes: applying, to a surface of a base material, the coating agent manufactured by the method for manufacturing the coating agent; and curing the curable resin component.

### [Advantageous Effects of Invention]

According to the present disclosure, antibacterial and antiviral performance can be improved.

### [Brief Description of Drawings]

[FIG. 1]

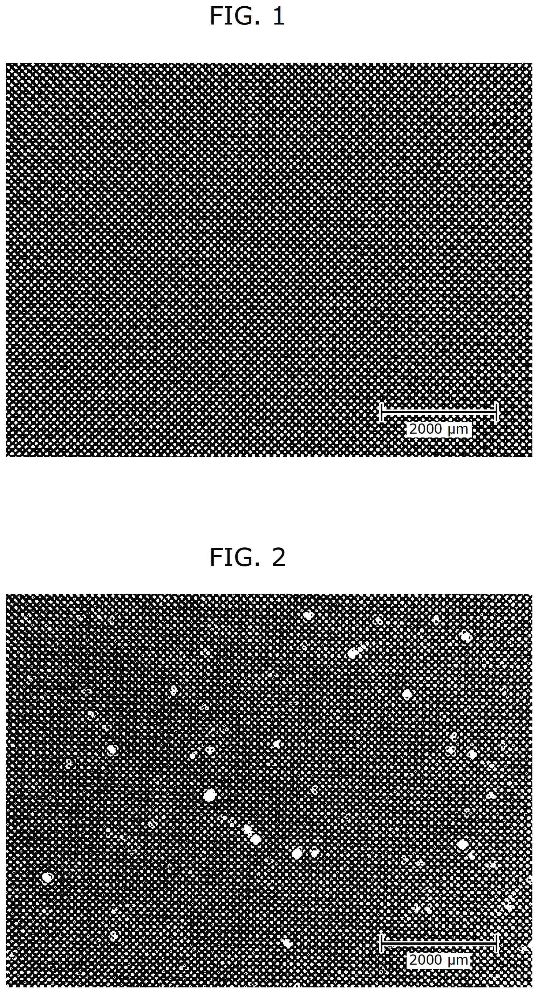

   FIG. 1 is an enlarged image of a display in which sparkling is not occurring.
[FIG. 2]
   FIG. 2 is an enlarged image of a display in which sparkling is occurring.
[FIG. 3]

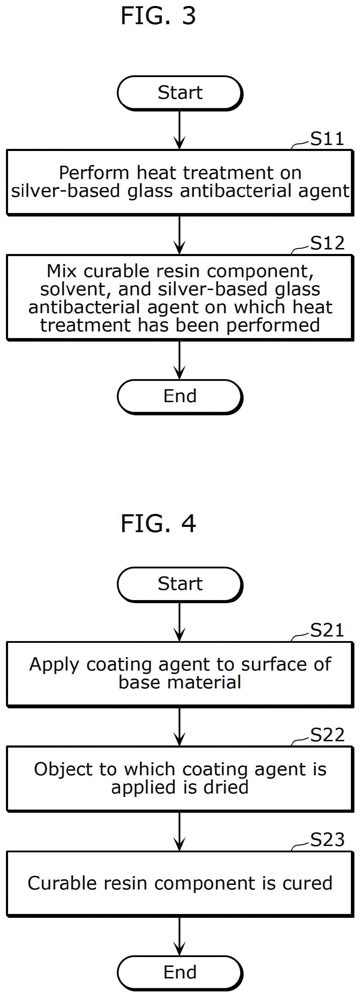

   FIG. 3 is a flowchart illustrating one example of a method for manufacturing a coating agent according to the embodiment.
[FIG. 4]
   FIG. 4 is a flowchart illustrating one example of a method for manufacturing a coating film according to the embodiment.
[FIG. 5]

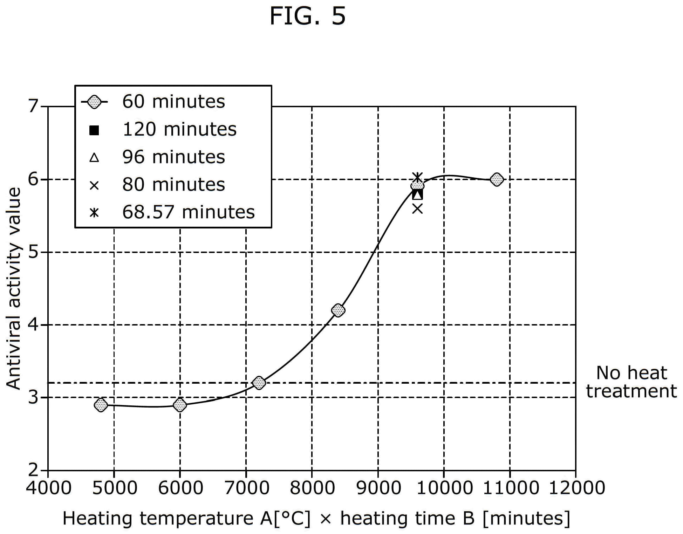

   FIG. 5 is a diagram illustrating a relationship between an antiviral activity value of the coating film and conditions of heat treatment performed on a silver-based glass antibacterial agent.

### [Description of Embodiment]

### (Outline of Present Disclosure)

Hereinafter, as an outline of the present disclosure, examples of a method for manufacturing a coating agent and a method for manufacturing a coating film according to the present disclosure will be described.

For example, a method for manufacturing a coating agent according to a first aspect of the present disclosure is a method that includes: performing heat treatment on a silver-based glass antibacterial agent; and mixing a curable resin component, a solvent, and the silver-based glass antibacterial agent on which the heat treatment has been performed. A × B is 8400 or more, where a heating temperature of the heat treatment is denoted by A[°C] and a heating time is denoted by B [minutes].

Accordingly, by performing the heat treatment on the silver-based glass antibacterial agent, antibacterial and antiviral performance of the silver-based glass antibacterial agent can be improved, and antibacterial and antiviral performance of the coating agent can be improved.

Furthermore, for example, a method for manufacturing a coating agent according to a second aspect of the present disclosure is the method for manufacturing the coating agent according to the first aspect, in which the heating temperature is 160°C or higher.

Accordingly, the heating time of the heat treatment can be shortened.

Furthermore, for example, a method for manufacturing a coating agent according to a third aspect of the present disclosure is the method for manufacturing the coating agent according to the first aspect or the second aspect, in which A × B is 9000 or more.

Accordingly, antibacterial and antiviral performance can be further improved.

Furthermore, for example, a method for manufacturing a coating agent according to a fourth aspect of the present disclosure is the method for manufacturing the coating agent according to any one of the first to third aspects, in which the curable resin component is photocurable.

Accordingly, curing can be performed without a need to heat a base material on which the coating agent is applied when a coating film is formed using the coating agent.

Furthermore, for example, a method for manufacturing a coating agent according to a fifth aspect of the present disclosure is the method for manufacturing the coating agent according to any one of the first to fourth aspects, in which a content percentage of the silver-based glass antibacterial agent in solid content in the coating agent is 2 percent or more by mass.

Accordingly, antibacterial and antiviral performance can be further improved.

Furthermore, for example, a method for manufacturing a coating agent according to a sixth aspect of the present disclosure is the method for manufacturing the coating agent according to the fifth aspect, in which the content percentage is 6 percent or less by mass.

Accordingly, optical characteristics of a coating film formed by the coating agent can be enhanced.

Furthermore, for example, a method for manufacturing a coating agent according to a seventh aspect of the present disclosure is the method for manufacturing the coating agent according to any one of the first to sixth aspects, in which a particle diameter of the silver-based glass antibacterial agent is 3 µm or less.

Accordingly, optical characteristics of the coating film formed by the coating agent can be enhanced.

Furthermore, for example, a method for manufacturing a coating film according to an eighth aspect of the present disclosure is a method that includes: applying, to a surface of a base material, the coating agent manufactured by the method for manufacturing the coating agent according to any one of the first to seventh aspects; and curing the curable resin component.

Accordingly, a coating film having improved antibacterial and antiviral performance can be manufactured using the above-mentioned coating agent.

Hereinafter, exemplary embodiments will be described in detail.

It should be noted that the embodiments described below merely illustrate general or specific examples of the present disclosure. The numerical values, shapes, materials, elements, the arrangement and connection of the elements, steps, the order of the steps, etc., described in the following embodiments are mere examples, and are therefore not intended to limit the present disclosure. Accordingly, among elements in the following embodiments, those not appearing in any of the independent claims will be described as optional elements.

Furthermore, in the present specification, terms indicating relationships between elements, terms indicating shapes of elements, and numerical ranges refer not only to their strict meanings, but also include variations that fall within an essentially equivalent range, such as a range of deviation of a few percent.

Furthermore, in the present specification, "a principal component of X" means the component constitutes a content percentage of more than 50 percent by mass of "X".

### (Embodiment)

Hereinafter, a coating agent and a coating film manufactured using the coating agent according to an embodiment will be described. The coating agent according to the embodiment is, for example, used as a hard coating agent having antibacterial and antiviral properties. By applying the coating agent according to the embodiment to a surface of a base material, a coating having antibacterial and antiviral properties can be formed as a coating film. The base material is appropriately selected as a target object to which antibacterial and antiviral properties are to be added, and the base material is not particularly limited. Since the coating film formed by the coating agent according to the embodiment exhibits superior optical characteristics, the coating film is suitable for optical applications. The coating film is, for example, used for coating a display, such as a touch panel display or the like. The coating film may be used as a resin film or a glass film that have antibacterial and antiviral properties.

### [Components of Coating Agent]

First, individual components included in the coating agent according to the embodiment will be described. The coating agent according to the embodiment includes a silver-based glass antibacterial agent, a curable resin component, and a solvent. The coating agent according to the embodiment may further include other components in addition to the silver-based glass antibacterial agent, the curable resin component, and the solvent. Examples of other components include, for example, various additive agents designed for use in coating agents. The coating agent according to the embodiment further includes a thixotropic agent and a leveling agent as the other components, for example.

Hereinafter, the individual components of the coating agent will be described in detail.

### (1) Silver-based Glass Antibacterial Agent

The silver-based glass antibacterial agent is added to impart antibacterial and antiviral properties to the coating film formed by the coating agent. Typically, by using an antibacterial agent, it is possible to provide antiviral properties in addition to antibacterial properties. Furthermore, in order to provide antiviral properties, there is a need to increase the amount of the antibacterial agent being added when compared to the amount typically used to provide antibacterial properties.

The silver-based glass antibacterial agent includes silver-based glass particles as a principal component. The silver-based glass particles include phosphate glass that contains silver. By using the silver-based glass particles, antibacterial and antiviral properties can be imparted to the coating film while preventing the optical characteristics of the coating film formed by the coating agent from being degraded. The silver-based glass particles include, for example, Ag₂O, ZnO, CaO, B₂O₃, and P₂O₅, or alternatively, Ag₂O, CaO, B₂O₃, and P₂O₅ as constituent components. One example of a compositional formula of the silver-based glass particles can be represented as 2/9AgO·(P₂O₅·ZnO)ₘ·2(2CaO·3BaO₃)ₙ. Here, m = 10, n = from 1.1 to 1.4, inclusive, are satisfied.

Specific examples of silver-based glass antibacterial agents include Ionpure (registered trademark) ZAF-HS and Ionpure Hb manufactured by ISHIZUKA GLASS CO., LTD., as well as Million Guard (registered trademark) PG721F manufactured by KOA GLASS CO., LTD., and the like, for example.

The silver-based glass antibacterial agent may include components other than the silver-based glass particles, such as by-products and the like produced during manufacturing of the silver-based glass particles. An example of a component other than the silver-based glass particles includes white carbon, for example. White carbon is also referred to as hydrous amorphous silica. A content percentage of the silver-based glass particles in the silver-based glass antibacterial agent is, for example, 90 percent or more by mass. Alternatively, the content percentage of the silver-based glass particles in the silver-based glass antibacterial agent may be 95 percent or more by mass.

A content percentage of the silver-based glass antibacterial agent in solid content in the coating agent is, for example, 2 percent or more by mass. Accordingly, antibacterial and antiviral performance of the coating agent can be enhanced. Here, "solid content" refers to components other than the solvent in the coating agent, and refers to residual components produced when the coating film is formed using the coating agent. Alternatively, the content percentage of the silver-based glass antibacterial agent in the solid content in the coating agent may be 4 percent or more by mass.

Furthermore, the content percentage of the silver-based glass antibacterial agent in the solid content in the coating agent is, for example, 6 percent or less by mass. Accordingly, the optical characteristics of the coating film can be enhanced, such as by maintaining a high level of light transmittance for the coating film, and by preventing the occurrence of sparkling or the like. Here, sparkling refers to a phenomenon in which, when a coating film is formed on a surface of a display, there is visual variation in brightness of the coating film due to scattering, refraction, and the like of light incident on the coating film. When sparkling occurs, visibility of a display becomes hampered, for example. FIG. 1 is an enlarged image of a display in which sparkling is not occurring. FIG. 2 is an enlarged image of a display in which sparkling is occurring. FIG. 1 and FIG. 2 are images captured using a microscope in a state in which a film is attached to an organic electroluminescent (EL) display and the display is caused to display a white color. The film used when capturing the image in FIG. 1 is equivalent to a coating film formed using a coating agent that includes a silver-based glass antibacterial agent having a particle diameter of 1 µm and for which a content percentage of the silver-based glass antibacterial agent in solid content is 4.1 percent by mass. As illustrated in FIG. 1, when sparkling is not occurring, for the most part, only light from each of the individual pixels is observed. On the other hand, as illustrated in FIG. 2, when sparkling is occurring, it can be observed that there are areas other than the points of light of each of the individual pixels at which brightness is high.

The particle diameter of the silver-based glass antibacterial agent is, for example, 3 µm or less. Accordingly, sparkling can be prevented from occurring in the coating film. The particle diameter of the silver-based glass antibacterial agent is a D50 median size. Here, "D50 median size" refers to a particle diameter for which 50 percent of a cumulative volume of the silver-based glass antibacterial agent includes particles in a given particle-size distribution that are counted as being smaller than the size of the particle diameter, where an entire amount of the cumulative volume of the silver-based glass antibacterial agent is 100 percent. A D50 median size can, for example, be calculated from a particle-size distribution obtained by measurement performed using a particle distribution analyzer, or a particle-size distribution obtained by performing image processing on images captured by an electron microscope. Furthermore, from the standpoint of handling performance and the like, the particle diameter of the silver-based glass antibacterial agent may be 0.2 µm or more, 0.5 µm or more, or 1 µm or more.

### (2) Curable Resin Component

The curable resin component is a principal component among the solid content in the coating agent. A content percentage of the curable resin component in the solid content in the coating agent may, for example, be 70 percent or more by mass, or may be 80 percent or more by mass. Examples of resins formed by curable resin components include, for example, acrylic resins, silicone resins, epoxy resins, urethane resins, and the like. The curable resin component is, for example, photocurable. Here, light refers to ultraviolet rays, for example. Due to the curable resin component being photocurable, the base material can be cured without the need to apply heat. The curable resin component may be thermosetting. In a case in which the curable resin component is thermosetting, from the standpoint of reducing the influence of heat on the base material during the curing process, the curing temperature of the curable resin component may be 100°C or lower, or may be 80°C or lower. Furthermore, the curing temperature of the curable resin component is, for example, 20°C or higher.

The curable resin component includes a resin raw material and a polymerization initiator. The resin raw material is a monomer or a polymer that includes a reactive functional group. For the curable resin component, one type of resin raw material may be used, or two or more types of resin raw materials may be used in combination. In the same manner, for the curable resin component, one type of polymerization initiator may be used, or two or more types of polymerization initiators may be used in combination. It is sufficient so long as a resin raw material and a polymerization initiator are selected according to the type of resin to be formed by the curable resin component, and the resin raw material and the polymerization initiator are not particularly limited. In a case in which the curable resin component is photocurable, the polymerization initiator is a photopolymerization initiator.

From the standpoint of enhancing the optical characteristics of the coating film, the curable resin component may be a component for forming an acrylic resin. Hereinafter, a resin raw material and a photopolymerization initiator, for a case in which acrylic resin is formed, will be described in detail.

The resin raw material includes, for example, a multifunctional acrylic monomer. The multifunctional acrylic monomer is a monomer that reacts when irradiated by light, and includes a plurality of acrylates or a plurality of methacrylates within its molecules, for example. From an optical reactivity standpoint, the multifunctional acrylic monomer may include a plurality of acrylates within its molecules. Specific examples of multifunctional acrylic monomers include, for example, acrylate compounds, such as trimethylolpropane triacrylate, pentaerythritol tetraacrylate, dipentaerythritol hexaacrylate, and the like. From the standpoint of hardness, wear resistance, and the like of the coating film, the multifunctional acrylic monomer may be dipentaerythritol hexaacrylate.

A content percentage of the multifunctional acrylic monomer in the resin raw material is, for example, 60 percent or more. Alternatively, the content percentage of the multifunctional acrylic monomer in the resin raw material may, for example, be 70 percent or more.

The resin raw material may further include an unsaturated group-containing acrylic copolymer. Due to the resin raw material further including the unsaturated group-containing acrylic copolymer, the occurrence of discoloration, such as yellowing of the coating film and the like can be prevented. Furthermore, due to the resin raw material further including the unsaturated group-containing acrylic copolymer, adhesion of the coating film to the base material and flexibility of the coating film can be improved. Furthermore, the resin raw material may include methyl methacrylate or the like as a residue that may be introduced in the formation of the unsaturated group-containing acrylic copolymer.

The unsaturated group-containing acrylic copolymer is formed by copolymerizing a (meth)acrylate monomer and a (meth)acrylate monomer having a carboxyl group.

Examples of (meth)acrylate monomers include benzyl methacrylate, benzyl acrylate, cyclohexyl acrylate, cyclohexyl methacrylate, phenoxyethyl acrylate, phenoxyethyl methacrylate, phenoxypolyethylene glycol acrylate, phenoxypolyethylene glycol methacrylate, styrene, nonylphenoxypolyethylene glycol monoacrylate, nonylphenoxypolyethylene glycol monomethacrylate, nonylphenoxypolypropylene monoacrylate, nonylphenoxypolypropylene monomethacrylate, 2-hydroxy-3-phenoxypropyl acrylate, 2-acryloyloxyethyl phthalate, 2-acryloyloxyethyl-2-hydroxyethyl phthalate, 2-methacryloyloxyethyl-2-hydroxypropyl phthalate, methyl acrylate, ethyl acrylate, methyl methacrylate, ethyl methacrylate, n-propyl acrylate, n-propyl methacrylate, i-propyl acrylate, i-propyl methacrylate, n-butyl acrylate, n-butyl methacrylate, i-butyl acrylate, i-butyl methacrylate, sec-butyl acrylate, sec-butyl methacrylate, tert-butyl acrylate, tert-butyl methacrylate, 2-hydroxyethyl acrylate, 2-hydroxypropyl acrylate, 2-hydroxypropyl methacrylate, 3-hydroxypropyl acrylate, 3-hydroxypropyl methacrylate, 2-hydroxybutyl acrylate, 2-hydroxybutyl methacrylate, 3-hydroxybutyl acrylate, 3-hydroxybutyl methacrylate, 4-hydroxybutyl acrylate, 4-hydroxybutyl methacrylate, 3-ethylhexyl acrylate, ethylene glycol monoacrylate, ethylene glycol monomethacrylate, glycerol acrylate, glycerol methacrylate, glycerin monoacrylate, glycerin monomethacrylate, dimethylaminoethyl acrylate, dimethylaminoethyl methacrylate, tetrahydrofurfuryl acrylate, tetrahydrofurfuryl methacrylate, and the like. A (meth)acrylate monomer may be used individually or two or more types may be mixed and used as needed.

Examples of (meth)acrylate monomers having carboxyl groups include acrylic acid, methacrylic acid, as well as acrylic acid dimer, crotonic acid, cinnamic acid, maleic acid, maleic anhydride, fumaric acid, itaconic acid, itaconic anhydride, citraconic acid, citraconic anhydride, reaction products of polybasic acids and hydroxyalkyl (meth)acrylates, and the like. A (meth)acrylate monomer having a carboxyl group may be used individually or two or more types may be mixed and used as needed.

A specific example of an unsaturated group-containing acrylic copolymer is, for example, a copolymer having a mass ratio of benzyl methacrylate to methacrylic acid of 80:20.

The acid value of the unsaturated group-containing acrylic copolymer is, for example, in a range of from 100 mg KOH/g to 150 mg KOH/g, inclusive. Furthermore, the weight-average molecular weight of the unsaturated group-containing acrylic copolymer is, for example, in a range of from 15000 to 25000, inclusive.

The photopolymerization initiator reacts to ultraviolet rays together with the resin raw material and is used to cure the resin raw material. As a photopolymerization initiator, for example, 1-hydroxycyclohexyl phenyl ketone, 2-methyl-4'-methylthio-2-morpholinopropiophenone, diphenyl(2,4,6-trimethylbenzoyl)phosphine oxide, bis(2,4,6-trimethylbenzoyl)phenylphosphine oxide, 2-benzyl-2-(dimethylamino)-1-(4-morpholinophenyl)-1-butano ne, 2-(dimethylamino)-2-(4-methylbenzyl)-1-(4-morpholinophenyl )butan-1-one, 1,2-octanedione, 1-[4-(phenylthio)phenyl]-, 2-(o-benzoyloxime), or the like can be used.

From the standpoint of curing performance and transparency, at least one of 1-hydroxycyclohexyl phenyl ketone or 2-methyl-4'-methylthio-2-morpholinopropiophenone may be used, or both may be used as a photopolymerization initiator.

The curable resin component may further include a photopolymerization co-initiator. For the photopolymerization co-initiator, 2,4-diethylthioxanthone, 2-isopropylthioxanthone, and 1-chloro-4-propoxythioxanthen-9-one or the like may be used.

### (3) Solvent

The solvent causes the curable resin component to dissolve, and causes the silver-based glass antibacterial agent to disperse. Examples of solvents include, for example, hydrocarbon solvents, such as n-hexane, benzene, toluene, and xylene; ketone solvents, such as acetone, methyl ethyl ketone, and methyl isobutyl ketone; ester solvents, such as ethyl acetate and butyl acetate; ether solvents, such as diethyl ether, tetrahydrofuran, and dipropylene glycol monomethyl ether; alcohol solvents, such as ethanol, n-propanol, i-propanol, n-butanol, and t-butanol; and halogenated solvents, such as dichloromethane, chloroform, carbon tetrachloride, and 1,2-dichloroethane, and the like. For the solvent, one type of solvent may be used, or two or more types of solvents may be used in combination. From the standpoint of volatility and dissolvability of the resin raw material, the solvent may be at least one of methyl ethyl ketone or methyl isobutyl ketone.

### (4) Thixotropic Agent

The thixotropic agent is added to adjust viscosity of the coating agent. By adding the thixotropic agent, it is possible to form fine wave-shaped recessed and raised portions having a surface roughness Ra of about 0.1 µm on the surface of the coating film.

Examples of thixotropic agents include, for example, acrylic viscosity modifiers; polyethylene viscosity modifiers; polyamide viscosity modifiers; polyether viscosity modifiers, such as polyethers and urethane-modified polyethers; and cellulose-based viscosity modifiers, such as hydroxyethyl cellulose, methyl cellulose, and modified hydroxyethyl cellulose and methyl cellulose, and the like. For the thixotropic agent, one type of thixotropic agent may be used, or two or more types of thixotropic agents may be used in combination. From the standpoint of maintaining light transmittance for the coating film, a cellulose-based viscosity modifier, such as cellulose acetate propionate or the like may be used as the thixotropic agent.

### (5) Leveling Agent

The leveling agent is used to reduce adhesion of fingerprints to the coating film. By adding a leveling agent, leveling performance, antifoaming performance, hydrophobic performance, and oleophobic performance can be improved.

Examples of leveling agents include silicone leveling agents, fluorine-modified acrylic leveling agents, and the like. From the standpoint of having both superior hydrophobic performance and oleophobic performance, a fluorine-modified acrylic leveling agent, such as a fluorine-modified acrylic oligomer or the like may be used as the leveling agent.

### [Method for Manufacturing Coating Agent]

Next, a method for manufacturing a coating agent according to the embodiment will be described. FIG. 3 is a flowchart illustrating one example of a method for manufacturing the coating agent according to the embodiment.

As illustrated in FIG. 3, in the manufacturing of the coating agent according to the embodiment, heat treatment is performed on a silver-based glass antibacterial agent (step S11). The method for performing heat treatment on the silver-based glass antibacterial agent is not particularly limited. Heat treatment is performed, for example, by inserting the silver-based glass antibacterial agent, which is placed inside of a heat-resistant container, into a heating device, such as a hot-air drying oven, that has been preheated to a heat treatment temperature.

Furthermore, in step S11, A × B is 8400 or more, where a heating temperature of the heat treatment is denoted by A[°C] and a heating time is denoted by B [minutes]. Accordingly, antibacterial and antiviral performance of the antibacterial agent can be improved. This is because it is presumed that heat treatment causes surface moisture to be eliminated in silver-based glass particles, and the silver-based glass particles become more active. From the standpoint of further improving antibacterial and antiviral performance, A × B may be 9000 or more, or may be 9600 or more. Furthermore, A × B is, for example, 20000 or less. Alternatively, A × B may be 12000 or less.

The heating temperature of the heat treatment is, for example, 60°C or higher. Alternatively, the heating temperature of the heat treatment may be 80°C or higher. Furthermore, from the standpoint of shortening the heating time of the heat treatment and improving antibacterial and antiviral performance, the heating temperature of the heat treatment may be 140°C or higher, or may be 160°C or higher. Furthermore, the heating temperature of the heat treatment is, for example, 400°C or lower. Alternatively, the heating temperature of the heat treatment may be 300°C or lower, or may be 200°C or lower.

The heating time of the heat treatment may, for example, be 20 minutes or more. Alternatively, the heating time of the heat treatment may be 30 minutes or more, or may be 50 minutes or more. Furthermore, the heating time of the heat treatment is, for example, 150 minutes or less. Alternatively, the heating time of the heat treatment may be 120 minutes or less, or may be 90 minutes or less.

Next, a curable resin component, a solvent, and the silver-based glass antibacterial agent on which the heat treatment has been performed in step S11 are mixed (step S12). Furthermore, at this point, components other than the silver-based glass antibacterial agent, the curable resin component, and the solvent, such as a thixotropic agent and a leveling agent may further be mixed in. In other words, in step S12, the silver-based glass antibacterial agent on which the heat treatment has been performed in step S11 and components other than the silver-based glass antibacterial agent of the coating agent are mixed. Accordingly, all of the components included in the coating agent are mixed, thereby resulting in the coating agent.

In the mixing in step S12, for example, first, at least a portion of the solvent and resin raw materials are placed in a container and contents of the container are agitated. Furthermore, a photopolymerization initiator, the silver-based glass antibacterial agent, and other components which are added as needed, such as a thixotropic agent and a leveling agent are placed in the container and the contents are further agitated. Furthermore, after using a bead mill or the like to disperse additives of the solvent as needed, the solvent is further added as needed to cause solid content in the coating agent to reach a predetermined concentration. Solid content concentration of the coating agent is 10 percent or more by mass and 50 percent or less by mass, for example. It should be noted that so long as each component of the coating agent is uniformly mixed, the order and the method of mixing are not particularly limited.

### [Method for Manufacturing Coating Film]

Next, a method for forming a coating film using the coating agent according to the embodiment will be described. FIG. 4 is a flowchart illustrating one example of the method for manufacturing the coating film according to the embodiment.

As illustrated in FIG. 4, in the manufacturing of the coating film according to the embodiment, first, the coating agent manufactured via the above-mentioned manufacturing method is applied to a surface of a base material (step S21). Although the base material is, for example, a display, a glass board, a resin board, a resin film, or the like, the base material is not particularly limited. The surface of the base material may be surface treated. Although the surface treatment is, for example, corona discharge treatment, the method for surface treatment is sufficient so long as the method is determined appropriately according to the material of the base material, and the method is not particularly limited. Furthermore, the method of application is not particularly limited. Examples of application methods include, for example, roll coating, bar coating, gravure coating, spray coating, airless spray coating, air spray coating, and the like.

The coating agent may first be diluted by further using a solvent before the coating is applied. For the solvent used for dilution, for example, solvent that is the same solvent included in the coating agent is used (at least one type of solvent included in the coating agent in a case in which a plurality of types of solvents are used in the coating agent). A dilution rate is appropriately set according to the application method and the solid content concentration of the coating agent before dilution, and the dilution rate is, for example, in a range of from 1.1-fold dilution to 2-fold dilution, inclusive.

A film thickness of the coating agent applied in step S21 is, for example, set to a value obtained by dividing the final film thickness of the coating film by the solid content concentration of the coating agent to cause the final film thickness of the coating film to be a desired film thickness.

Next, an object to which the coating agent is applied in step S21 is dried (step S22). Accordingly, the solvent in the coating agent is eliminated. The drying temperature is, for example, in a range of from 60°C to 100°C, inclusive. Furthermore, the drying time is in a range of from 0.5 minutes to 5 minutes, inclusive. After the object is dried, the object is allowed to cool at room temperature (left to cool unattended) for a predetermined amount of time, for example. The cooling time is, for example, in a range of from 1 minute to 10 minutes, inclusive. Here, the cooling time refers to the duration of time from when drying is ended until curing as described below is started.

Next, a curable resin component is cured (step S23). Accordingly, the curable resin component is cured to obtain the coating film used to coat the surface of the base material. In a case in which the curable resin component is photocurable, the curable resin component is cured by irradiating the object to which the coating agent is applied with ultraviolet rays, for example.

Examples of light sources used in a case in which ultraviolet ray irradiation is performed include, for example, high-pressure mercury lamps, ultra-high-pressure mercury lamps, carbon arc lamps, xenon lamps, metal halide lamps, and the like. Although conditions of ultraviolet ray irradiation are set appropriately based on the components of the coating agent, film thickness, and the like, for example, the conditions may be set to cause cumulative illuminance on the object to which the coating agent is applied to be in a range of from 100 mJ/cm² to 20000 mJ/cm², inclusive.

### [Working Examples]

Hereinafter, although coating agents and coating films according to the present disclosure will be described in detail in working examples, the present disclosure is not limited to the following working examples in any way.

### [Fabrication of Coating Agent]

Coating agents are fabricated in the working examples and comparative examples via the following methods.

### (1) Working Example 1

First, a silver-based glass antibacterial agent (Million Guard PG721F manufactured by KOA GLASS CO., LTD.) having a particle diameter of 1 µm was placed inside of a metal container, and the silver-based glass antibacterial agent was subjected to heat treatment in a hot-air drying oven under heat treatment conditions that included a heating temperature of 180°C and a heating time of 60 minutes. In other words, in a case in which the heating temperature of the heat treatment is denoted by A[°C] and the heating time is denoted by B [minutes], heat treatment was performed on the silver-based glass antibacterial agent under conditions to satisfy A = 180, B = 60, and A × B = 10800.

Next, a solvent that includes methyl ethyl ketone as a principal component was placed inside the container, a resin raw material was further placed inside the container, and the contents were agitated. For the resin raw material, dipentaerythritol hexaacrylate, an unsaturated group-containing acrylic copolymer, and methyl methacrylate was used. Here, a mass ratio of dipentaerythritol hexaacrylate to the unsaturated group-containing acrylic copolymer to methyl methacrylate was 76.53:22.95:0.53. Furthermore, for the unsaturated group-containing acrylic copolymer, a copolymer having a mass ratio of benzyl methacrylate to methacrylic acid of 80:20 (acid value of 132 mg KOH/g and weight-average molecular weight of 19000) was used.

Next, a photopolymerization initiator, a silver-based glass antibacterial agent, a thixotropic agent, and a leveling agent were further placed in the container and agitation was performed, and a bead mill was used to disperse additives from the solvent. For the photopolymerization initiator, 1-hydroxycyclohexyl phenyl ketone and 2-methyl-4'-methylthio-2-morpholinopropiophenone were used. Here, a ratio of each of 1-hydroxycyclohexyl phenyl ketone and 2-methyl-4'-methylthio-2-morpholinopropiophenone to the resin raw material was 1.17 percent by mass. Furthermore, for the thixotropic agent and the leveling agent, cellulose acetate propionate and a fluorine-modified acrylic oligomer were used, respectively.

Content percentages of the curable resin component, the silver-based glass antibacterial agent, the thixotropic agent, and the leveling agent in solid content in the coating agent were 84.3 percent by mass, 4.10 percent by mass, 11.43 percent by mass, and 0.17 percent by mass, respectively.

Methyl ethyl ketone was further added to the container to cause the solid content concentration of the coating agent to be 30 percent by mass, thereby causing the coating agent in Working Example 1 to be obtained.

### (2) Working Examples 2 to 7

Coating agents in working examples 2 to 7 were obtained by performing fabrication, in the same manner as in Working Example 1, except that heat treatment conditions of silver-based glass antibacterial agents were changed to the conditions indicated in TABLE 1.

### (3) Working Examples 8 and 9

Coating agents in working examples 8 and 9 were obtained by performing fabrication, in the same manner as in Working Example 1, except that particle diameters of silver-based glass antibacterial agents were changed to the particle diameters indicated in TABLE 1.

### (4) Working Examples 10 to 12

Coating agents in working examples 10 to 12 were obtained by performing fabrication, in the same manner as in Working Example 1, except that content percentages of silver-based glass antibacterial agents in solid content of coating agents were changed to the content percentages indicated in TABLE 1, and components other than the silver-based glass antibacterial agents were adjusted according to the changes made to the content percentages.

### (5) Comparative Example 1

A coating agent in Comparative Example 1 was obtained by performing fabrication, in the same manner as in Working Example 1, except that heat treatment was not performed on a silver-based glass antibacterial agent.

### (6) Comparative Examples 2 to 4

Coating agents in comparative examples 2 to 4 were obtained by performing fabrication, in the same manner as in Working Example 1, except that heat treatment conditions of silver-based glass antibacterial agents were changed to the conditions indicated in TABLE 1.

### [Fabrication of Coating Film]

Coating films were fabricated using the coating agents obtained above in the working examples and the comparative examples. Fabrication of a coating film using a coating agent was performed under the same conditions for each of the working examples and the comparative examples.

First, the coating agent was applied, via a bar-coating method at a film thickness of 40 µm, to a surface of a polyethylene terephthalate film (Lumirror (registered trademark) T60 manufactured by TORAY INDUSTRIES, INC.) that was prepared as a base material The coating agent was used after first being diluted at a dilution rate of 1.2-fold dilution with methyl ethyl ketone to cause the solid content concentration to be 25 percent by mass. Furthermore, corona discharge treatment was performed on the surface of the base material before the coating agent was applied.

Next, an object to which the coating agent was applied was dried for 1 minute at 100°C and left unattended to cool for 3 minutes at room temperature. After being cooled, ultraviolet ray irradiation was performed under a condition of 300 mJ/cm², thereby allowing a coating film to be obtained by curing the curable resin component. The coating film obtained had a film thickness of 10 µm.

### [Evaluation of Antibacterial and Antiviral Performance of Coating Film]

The antibacterial and antiviral performance of the coating films obtained as described above for each of the working examples and the comparative examples was evaluated.

### (1) Evaluation Method

For the evaluation of the antibacterial and antiviral performance of the coating films, in compliance with JIS R 1706:2020, bacteriophage antiviral testing was performed under dark environment conditions, and antiviral activity values indicated by logarithmic differences in infectious titer before testing and after testing were calculated. It should be noted however, the bacteriophage colony count was changed from that defined in JIS R 1706:2020 to a range of from 6 × 10¹⁰ to 6 × 10¹¹ cfu/ml, and testing was performed.

### (2) Evaluation Results

The evaluation results are shown in TABLE 1. Moreover, the relationship between A × B and the antiviral activity values of the coating films in working examples 1 to 7 and comparative examples 2 to 4, for which the silver-based glass antibacterial agents were subjected to heat treatment performed under different heat treatment conditions, is illustrated in FIG. 5. In FIG. 5, evaluation results for testing performed under the same heating time and heat treatment conditions are plotted using the same type of markers. Furthermore, in FIG. 5, a dash-dotted line indicates an antiviral activity value of a coating film in Comparative Example 1 for a case in which heat treatment is not performed on a silver-based glass antibacterial agent.

**[TABLE 1]**

| | Antibacterial agent | | Heat treatment conditions | | | Antiviral activity value |
|---|---|---|---|---|---|---|
| | Particle diameter (µm) | Content percentage (% by mass) | Heating temperature A (°C) | Heating time B (minutes) | A × B | |
| Working Example 1 | 1 | 4.10 | 180 | 60 | 10800 | 6.0 |
| Working Example 2 | 1 | 4.10 | 160 | 60 | 9600 | 5.9 |
| Working Example 3 | 1 | 4.10 | 140 | 60 | 8400 | 4.2 |
| Working Example 4 | 1 | 4.10 | 80 | 120 | 9600 | 5.8 |
| Working Example 5 | 1 | 4.10 | 100 | 96 | 9600 | 5.8 |
| Working Example 6 | 1 | 4.10 | 120 | 80 | 9600 | 5.6 |
| Working Example 7 | 1 | 4.10 | 140 | 68.57 | 9600 | 6.0 |
| Working Example 8 | 3 | 4.10 | 180 | 60 | 10800 | 6.5 |
| Working Example 9 | 10 | 4.10 | 180 | 60 | 10800 | 6.2 |
| Working Example 10 | 1 | 2.47 | 180 | 60 | 10800 | 5.9 |
| Working Example 11 | 1 | 5.73 | 180 | 60 | 10800 | 6.0 |
| Working Example 12 | 1 | 8.20 | 180 | 60 | 10800 | 6.2 |
| Comparative Example 1 | 1 | 4.10 | No heat treatment | | | 3.2 |
| Comparative Example 2 | 1 | 4.10 | 80 | 60 | 4800 | 2.9 |
| Comparative Example 3 | 1 | 4.10 | 100 | 60 | 6000 | 2.9 |
| Comparative Example 4 | 1 | 4.10 | 120 | 60 | 7200 | 3.2 |

As illustrated in TABLE 1 and FIG. 5, when A × B is 8400 or more, when compared to a case in which heat treatment is not performed on the silver-based glass antibacterial agent, the antiviral activity value rises and exceeds 4. In other words, when heat treatment is performed on silver-based glass antibacterial agents under conditions in which A × B is 8400 or more, antibacterial and antiviral performance improves.

Furthermore, as illustrated in FIG. 5, when A × B is 9000 or more, it can be considered that the antiviral activity value exceeds 5, and by performing heat treatment on a silver-based glass antibacterial agent under conditions that cause A × B to be 9000 or more, antibacterial and antiviral performance can be significantly improved.

Moreover, as can be seen by comparing working example 2 and working examples 4 to 7, when the values of A × B are the same, there is no significant difference in antiviral activity values even when heating temperatures and heating times of the heat treatment are different.

Furthermore, as illustrated in TABLE 1, even in a case in which particle diameters of silver-based glass antibacterial agents are set to be larger than those of working examples 1 to 7, as is the case in working examples 8 and 9, coating films having high levels of antibacterial and antiviral performance are obtained. Moreover, as can be seen in working example 1 and working examples 10 to 12, coating films having high levels of antibacterial and antiviral performance are obtained not only in cases in which content percentages in solid content of silver-based glass antibacterial agents are increased to be higher than a content percentage of 4.10 percent by mass, but also in cases in which content percentages in solid content of silver-based glass antibacterial agents are decreased from a content percentage of 4.10 percent by mass to a content percentage of 2.47 percent by mass.

### [Evaluation of Optical Characteristics of Coating Film]

The optical characteristics of the coating films obtained as described above for each of working example 1 and working examples 8 to 12, were evaluated. In regard to optical characteristics, light transmittance was measured and sparkling was evaluated.

### (1) Method for Measuring Light Transmittance

Light transmittance of each of the coating films was measured using a haze meter manufactured by BYK Additives & Instruments. The light transmittance measured was total light transmittance of visible light. When light transmittance is 85 percent or more, it can be said that transparency of a coating film is high.

### (2) Method for Evaluating Sparkling

A smartphone (Galaxy (registered trademark) A30 manufactured by Samsung Electronics Co., Ltd.) provided with an organic electroluminescent (EL) display having a pixel density of 403 PPi was prepared as a display. Furthermore, droplets of isopropyl alcohol were applied onto the display, a coating film was placed on the display, and the coating film was pressed down on to remove any air between the coating film and the display, after which the degree of occurrence of sparkling was visually evaluated based on the following criteria. If the evaluation score is "2" or more, this indicates a satisfactory level in which sparkling is difficult to notice during practical use.
3: Sparkling is hardly noticeable.
2: Sparkling is slightly noticeable (brightness of locations affected by sparkling is low).
1: Sparkling is clearly noticeable (brightness of locations affected by sparkling is high).

### (3) Evaluation Result

The evaluation results for optical characteristics are shown in TABLE 2.

**[TABLE 2]**

| | Antibacterial agent | | Transmittance (%) | Sparkling |
|---|---|---|---|---|
| | Particle diameter (µm) | Content percentage (% by mass) | | |
| Working Example 1 | 1 | 4.10 | 87 | 3 |
| Working Example 8 | 3 | 4.10 | 87 | 3 |
| Working Example 9 | 10 | 4.10 | 87 | 2 |
| Working Example 10 | 1 | 2.47 | 87 | 3 |
| Working Example 11 | 1 | 5.73 | 87 | 3 |
| Working Example 12 | 1 | 8.20 | 86 | 2 |

As shown in TABLE 2, it was confirmed that optical characteristics of each of the coating films obtained in working example 1 and working examples 8 to 12, was satisfactory. Furthermore, optical characteristics were particularly satisfactory for working examples 1 and 8, in which particle diameters of the silver-based glass antibacterial agents were 3 µm or less, as well as working examples 1, 10, and 11, in which content percentages of the silver-based glass antibacterial agents in solid content in the coating agents were 5.73 percent or less by mass.

### (Other Embodiments, etc.)

While the coating agent and the coating film according to the present disclosure have been described above based on the embodiment and the working examples, the present disclosure is not limited to this embodiment and these working examples. Forms obtained by various modifications to the embodiment or the working examples that may be conceived by a person of ordinary skill in the art or separate forms obtained by combining a portion of elements in the embodiment and the working examples, for as long as they do not depart from the essence of the present disclosure, may also be included within the scope of the present disclosure.

### [Industrial Applicability]

The coating agent and the coating film according to the present disclosure can be used to coat various target objects.

## Claims

1. A method for manufacturing a coating agent, the method comprising:
performing heat treatment on a silver-based glass antibacterial agent; and
mixing a curable resin component, a solvent, and the silver-based glass antibacterial agent on which the heat treatment has been performed, wherein
A × B is 8400 or more, where a heating temperature of the heat treatment is denoted by A[°C] and a heating time is denoted by B [minutes].

2. The method according to claim 1, wherein
the heating temperature is 160°C or higher.

3. The method according to claim 1 or 2, wherein
A × B is 9000 or more.

4. The method according to any one of claims 1 to 3, wherein
the curable resin component is photocurable.

5. The method according to any one of claims 1 to 4, wherein
a content percentage of the silver-based glass antibacterial agent in solid content in the coating agent is 2 percent or more by mass.

6. The method according to claim 5, wherein
the content percentage is 6 percent or less by mass.

7. The method according to any one of claims 1 to 6, wherein
a particle diameter of the silver-based glass antibacterial agent is 3 µm or less.

8. A method for manufacturing a coating film, the method comprising:
applying, to a surface of a base material, the coating agent manufactured by the method for manufacturing the coating agent according to any one of claims 1 to 7; and
curing the curable resin component.
